# EUROPEAN PATENT APPLICATION

(11) **EP 1 700 685 A2**
(43) Date of publication of application: **13.09.2006**
(21) Application number: 06110779.3
(22) Date of filing: 07.03.2006
(51) Int. Cl.: B29C 65/20

(54) **Welder for plastics pipes and pipe fittings, of the type for socket welding**

(30) Priority: 11.03.2005 IT PD20050071
(71) Applicant: RITMO S.p.A., 35037 Teolo (Padova) (IT)
(72) Inventor: Bortoli, Renzo, 35038 Torreglia (PD) (IT)
(74) Representative: Modiano, Micaela Nadia

(57) **Abstract**

A welder for plastics pipes and pipe fittings of the type for socket welding, comprising:
- a compact longitudinal supporting member (11), on which a sliding guide (12) is arranged,
- a carriage (13), which supports a first clamp (14) for locking a pipe fitting or a pipe and is arranged so as to slide on the sliding guide (12),
- a fixed post (16) on the longitudinal supporting member (11), which is arranged substantially at one end of the sliding guide (12) and on which a second locking clamp (17) for a pipe and/or pipe fitting is arranged,
- a movable block (18) for supporting a heating element (19) onto which the sleeve (54) for melting the pipe fittings or pipes is to be fixed. In the block (18) there are means (22) for kinematic connection to the carriage (13) and to the fixed post (16); an actuation handwheel (23) is associated with the kinematic connection means (22).

The actuation handwheel (23), the means (20, 40) for closing the first locking clamp (14) and the second locking clamp (17), the means (47) for operating the heating element (19) can be arranged selectively on one of the two sides of the longitudinal supporting member (11), depending on the space available during use on already-installed pipes and/or pipe fittings.

## Description

The present invention relates to a welder for plastics pipes and pipe fittings, of the type for socket welding.

As it is known, socket welding is known among the various conventional weldings for plastics pipes.

This type of welding is applied mostly to the connection between pipes and pipe fittings made of plastics; the pipes act as a male body and the fittings act as a female body, accommodating the ends of the pipes.

The pipe is connected to the fitting by heating and partial melting of the outer end of the pipe and of the inner end of the fitting.

This heating occurs by means of a so-called heating element, a heating device based on an electric resistor, which in association with a die, also known as sleeve, allows to heat and melt the ends of the pipe and of the fitting.

The sleeve is generally coated with a non-stick material and is composed of two portions, a first male portion and a second female portion, which respectively mate, during the heating step, with the internal part of the fitting and the external part of the pipe.

Currently known socket welders are constituted generally by a large footing, on which two carriages are provided which are slidingly associated with a horizontal pair of guiding columns.

Locking clamps for the pipe or the fitting are arranged on such carriages.

These carriages are associated with a system, for example of the rack-and-pinion type, for movement along the guiding columns; this movement system comprises a handwheel for actuating their advancement which is associated with the pinion.

A crank for actuating the closure of the respective locking clamp by means of a worm screw-female thread system is associated with each carriage.

An articulated arm is provided centrally with respect to the footing and the heating element is provided at the end of such arm.

The articulated arm allows to interpose the heating element with the sleeve between the two carriages, so as to allow the insertion of the pipes in the sleeve.

The operation of these welders entails setting up the welder in a working position with the footing properly rested on the ground.

The pipe and the fitting are then picked up and positioned, locking them, on the locking clamps.

The heating element is arranged with the sleeve between the pipe and the fitting and then, by acting on the handwheel, the carriages are moved with the pipe and the fitting toward the center of the footing, where the sleeve is provided.

When the fitting and the pipe are mated to the sleeve, one waits for the time required for melting.

The carriages with the pipe and the fitting are then moved away and the heating element with the sleeve is moved from the center of the footing.

At this point, the carriages are moved closer, inserting the ends of the pipe and of the fitting, which are melted, into one another, and one waits through the solidification step.

The clamps are then opened and the pipe with the fitting is extracted and installed.

One problem which is not solved by any commercially available welder is the welding of pipes and fittings which are already installed in an extremely confined space.

By way of example, mention can be made of the confined space of a ship, in which the hydraulic lines are exposed and hang by means of a fixing collar and are close to the ceiling and walls, in practice limiting the maneuvering space for any welding operations.

In these cases, the use of socket welders of the known type is substantially impossible.

The space available for the arrangement of the welder, and the often elevated location of the welding positions, in fact do not allow to use such machine.

Further, when the pipes and the fittings are adjacent to a wall, the controls for operating the carriages, the clamps and the heating element might be arranged on the side of the welder which is directed toward the wall and therefore might not be usable by the operator.

The aim of the present invention is to provide a welder for plastics pipes and pipe fittings, of the type for socket welding, which solves the drawbacks noted in known types.

Within this aim, an object of the present invention is to provide a welder for plastics pipes and pipe fittings, of the type for socket welding, which can be used on pipes and pipe fittings which are already installed.

Another object of the present invention is to provide a welder for plastics pipes and pipe fittings, of the type for socket welding, which can be used conveniently also on pipes and pipe fittings which are installed and adjacent to walls.

Another object of the present invention is to provide a welder for plastics pipes and pipe fittings, of the type for socket welding, which is compact and structurally simple.

A further object of the present invention is to provide a welder for plastics pipes and pipe fittings, of the type for socket welding, which is easy and reliable in use.

A still further object of the present invention is to provide a welder for plastics pipes and pipe fittings, of the type for socket welding, which can be manufactured with known systems and technologies.

This aim and these and other objects, which will become better apparent hereinafter, are achieved by a welder for plastics pipes and pipe fittings, of the type for socket welding, characterized in that it comprises:
- a compact longitudinal supporting member, on which a sliding guide is arranged,
- a carriage, which supports a first clamp for locking a pipe fitting or a pipe and is arranged so as to slide on said sliding guide,
- a fixed post on said longitudinal supporting member, which is arranged substantially at one end of said sliding guide and on which a second locking clamp is arranged,
- a movable block for supporting a heating element onto which the sleeve for melting the pipe fittings and/or pipes is to be fixed, said block being provided with means for kinematic connection to said carriage and to said fixed post, an actuation handwheel being associated with said kinematic connection means,
said actuation handwheel, the means for closing said first locking clamp and said second locking clamp, the means for operating said heating element being arrangeable selectively on one of the two sides of said longitudinal supporting member, depending on the space available during use on already-installed pipes and/or pipe fittings.

Further characteristics and advantages of the invention will become better apparent from the following detailed description of a preferred but not exclusive embodiment thereof, illustrated by way of non-limiting example in the accompanying drawings, wherein:
Figure 1 is a front perspective view of a welder according to the invention;
Figure 2 is a rear perspective view of the welder of Figure 1;
Figure 3 is a side view of the welder of Figure 1, during the step for melting the ends of a pipe and of a pipe fitting mounted thereon;
Figure 4 is a front view, taken from an intermediate point of the longitudinal supporting member, of the welder of Figure 1 without the heating element, with the locking clamps open and with the pipe fitting and the pipe welded together, during extraction;
Figure 5 is an exploded perspective view of a heating element used in a welder according to the invention.

With reference to the figures, a welder according to the invention is generally designated by the reference numeral 10.

The welder 10 comprises a compact longitudinal supporting member 11, on which a sliding guide 12 is arranged.

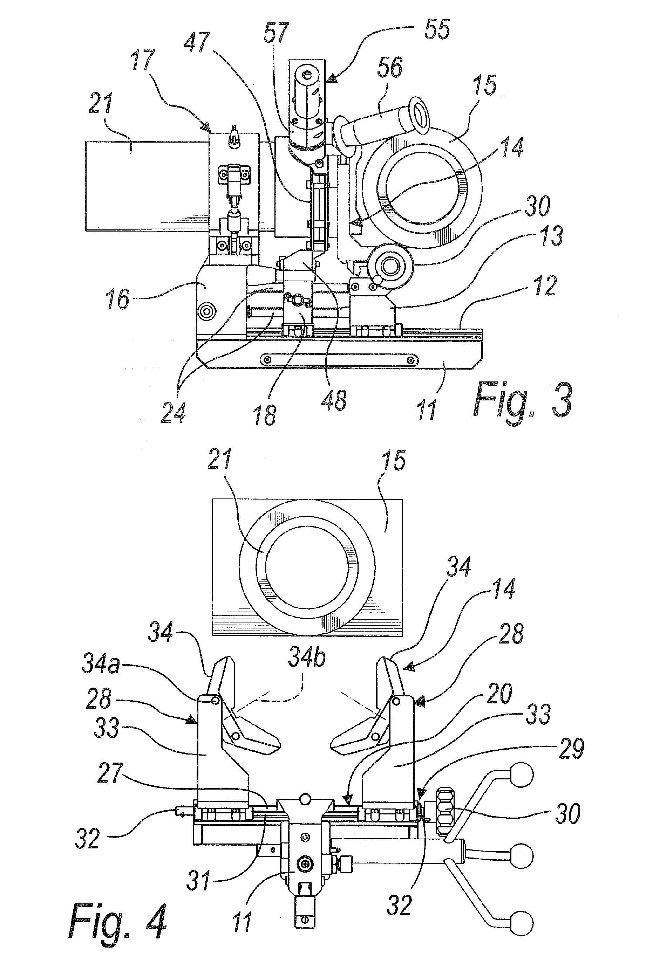

A carriage 13, for example of the ballscrew type, is arranged on the sliding guide 12 and supports a first locking clamp 14, in this embodiment, for a pipe fitting 15 (as shown in Figures 3 and 4).

On the opposite side of the longitudinal member 11 with respect to the carriage 13 a fixed post 16 is provided, which is arranged substantially at one end of the sliding guide 12.

A second locking clamp 17 is arranged on the fixed post 16.

A movable block 18 is provided between the carriage 13 and the fixed post 16 and supports a heating element 19 onto which a sleeve 54 for melting the pipe fitting 15 and a pipe 21 is to be fixed.

Means 22 for kinematic connection to the carriage 13 and to the fixed post 16 are provided in the block 18.

An actuation handwheel 23 of the type with spokes is provided for the actuation of the kinematic connection means 22.

The kinematic connection means 22 comprise two racks 24, which are constituted by toothed bars which are arranged parallel to each other, one above the other, and fixed respectively to the fixed post 16 and to the carriage 13.

The racks 24 mesh with a pinion (not shown in the figures), which is arranged inside the block 18.

The actuation handwheel 23 is rigidly coupled to the pinion.

The block 18 is arranged so that it can slide on the sliding guide 12.

Respective first closure means 20 are associated with the first locking clamp 14 and comprise a base 26, which is rigidly coupled to the carriage 13 and on which an additional guide 27 for mutually opposite first jaws 28 of the first clamp 14 is arranged at right angles to the sliding guide 12.

Means 29 for moving the first jaws 28 are associated with said jaws and are actuated by a crank 30, which can be connected to the movement means 29 selectively on one of the two sides of the longitudinal member 11.

The movement means 29 comprise a worm screw 31-female thread system associated with the first jaws 28.

Reversible mating devices 32 for the actuation crank 30 are provided at the ends of the worm screw 31.

In this manner, the crank 30 can be arranged selectively on one of the two sides of the longitudinal member 11, thus allowing to work conveniently on the most comfortable side.

Each first jaw 28 comprises a base portion 33, which is associated slidingly with the additional guide 27, and a locking portion 34, which is substantially shaped like an inverted letter V.

The inverted V-shaped locking portion 34 is designed to lock the pipe fitting 15 and is pivoted freely to the base portion 33.

Both locking portions 34 can therefore oscillate freely; in this manner they can be arranged, during the loading of the pipe fitting, so that their concavity is directed away from the position of the longitudinal supporting member 11 (in practice upward) in order to accommodate said pipe fitting, as shown in Figure 4.

In particular, each inverted V-shaped locking portion 34 is pivoted by a point 34a thereof which is located above (with reference to the figures) the point where the bisecting line 34b of the concavity intersects the locking portion 34.

Each locking portion 34 has, along the V-shaped profile, an abutment shoulder 35 for the end edge of the pipe fitting 15.

Depending on the size and length of the pipe fitting 15, it is possible to associate with the first locking clamp 14 extensions 36 in order to increase the supporting surface for the pipe fitting 15.

The extensions 36 have the same V-shaped profile as the locking portion 34 and are fixed reversibly thereon, for example by means of screws.

The second locking clamp 17 has a base 37 on which there is an element 38 for engaging a complementary shaped mating portion 39 formed on the fixed post 16.

The engagement element 38 mates with the complementarily shaped mating portion 39 with two possible arrangements, one rotated through 180° with respect to the other on the contact surface of the second clamp 17 on the fixed post 16.

In this manner, it is possible to arrange the second locking clamp 17, and the corresponding closure means, referenced as second closure means 40, so as to act conveniently on one side of the longitudinal supporting member 11 or on the opposite side.

The second locking clamp 17 is constituted by two second jaws 41, which have a substantially semicylindrical internal shape and are mutually pivoted by one end.

Of these two jaws 41, a first jaw 41 a is fixed and a second jaw 41b is movable.

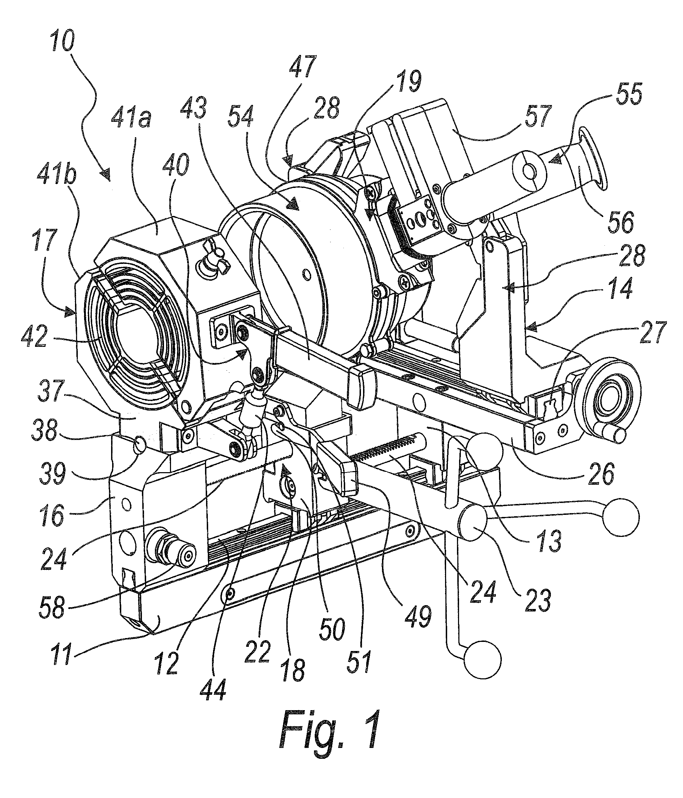

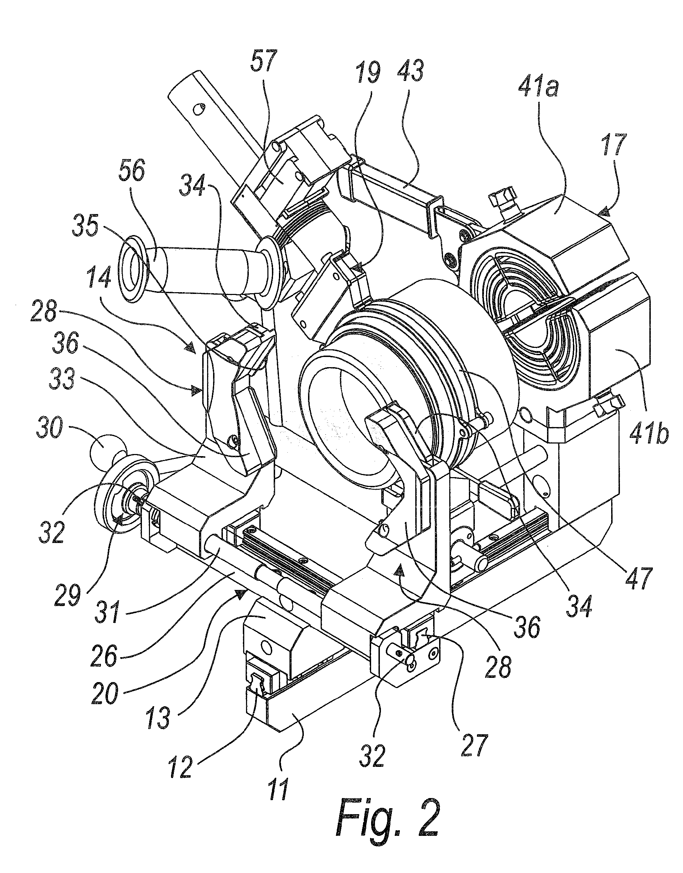

In Figures 1 and 2, inside the second clamp 17 reduction elements 42 are provided, to be used in order to adapt conveniently the clamp to the diameter of the pipe being welded.

The respective first means 40 for closing the second clamp 17 are associated with the second jaws 41.

The closure means 40 are constituted by a lever system which is available to the operator.

Said lever system comprises a lever 43, which is available to the operator and is pivoted to a first bracket which is fixed to the movable jaw 41b, and a rod 44, which is articulated to said lever and to a second bracket which is fixed to the fixed jaw 41a, according to a substantially known closure mechanism.

The heating element 19 comprises a metallic plate 45, which in this embodiment has a circular contour.

The metallic plate 45 is mated so as to rotate slidingly with a frame 47 which is fixed to a base 48 for coupling to the supporting block 18, on which a lever 49 is pivoted which has a portion 50 for mating with a locking element 51 (provided on the supporting block 18) when the lever 49 is in the engagement position, as clearly visible in Figure 1.

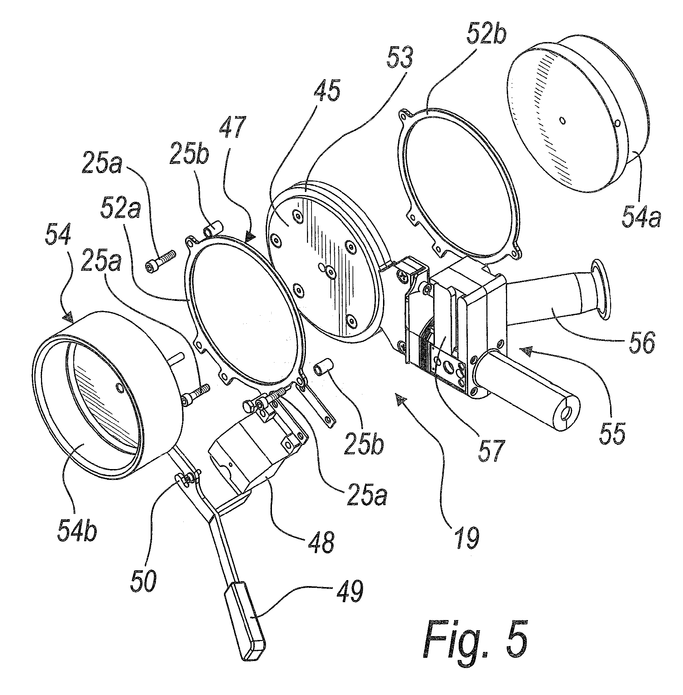

In this embodiment, the frame 47 is constituted by two mutually opposite and mutually fixed rings, which lock in a sandwich-like fashion the metallic plate 45 along its axial movement; in particular, as clearly shown in Figure 5, a first ring 52a, which is fixed to the engagement base 48, mates slidingly with a circular guide 53 formed at the peripheral region of the metallic plate 45, while a second ring 52b is arranged on the opposite side of the plate 45 and is fixed peripherally, by bolting, to the first ring 52a.

The rings 52a and 52b are connected by three threaded elements 25a, which are inserted through spacer bushes 25b for the rings 52a and 52b.

Two of these spacing bushes 25b have a height which is substantially equal to the thickness of the metallic plate 45, while a third bush is lower: by acting on the threaded element 25a which corresponds to said lower bush, it is possible to adjust the contact pressure of the rings 52 against the plate 45 and therefore adjust their slidability in rotating from one side to the other of the longitudinal member 11.

The sleeve 54 is constituted by two separate portions, a male portion 54a and a female portion 54b, which can be fixed by contact respectively of the two mutually opposite faces of the metallic plate 45, for example by way of threaded connections, not shown in the figures.

Means 55 for operating the heating element 19 are associated with the metallic plate 45 and comprise a knob 56, which is fixed to a heat source 57, of the type with an electric resistor, which is controlled by a heat regulator or thermostat; the heat source 57 is fixed to the plate 45.

The knob 56 and the heat source 57, by being rigidly coupled to the metallic plate 45, can slide on the frame 47 constituted by the rings 52, thus moving from one side to the other of the longitudinal member 11.

In this manner, the operator can have the heating element 19 available on the preferred side of the welder 10.

A so-called loading button 58 is provided on the side of the fixed post 16.

The loading button 58, of a substantially known type, moves, when operated, a locking element (not shown in the figures), which is interposed along the stroke of the rack 24 which is fixed to the carriage 13 which supports the first locking clamp 14.

The use of the loading button 58 is explained hereinafter.

The welding method performed with said welder is described hereinafter.

The insertion depth of the pipe fitting 15, already shaped in said fitting, is measured by using a gage.

The same dimension must be marked visibly on the pipe 21 (this is required in order to check correct mating during welding).

Then, while keeping the maximum opening between the first clamp 14 and the second clamp 17, the pipe fitting 15 is locked on the first clamp 14, ensuring that the end rim of the pipe fitting rests completely against the abutment 35 provided on the jaws 28.

The pipe 21 is then positioned, keeping a certain portion so that it protrudes toward the center of the welder without locking it permanently, thus ensuring possible sliding.

At this point, the loading button 58 is pressed with one hand (thus producing the maximum advancement of the carriage 13) and the handwheel 23 is turned clockwise with the other hand, consequently moving mutually closer the first clamp 14 and the second clamp 17 until they abut.

When the pipe fitting 15 abuts against the pipe 21, the loading button 58 is released and the second clamp 17 is locked permanently, thus locking the pipe 21.

A variation of the device comprises an additional device for temporarily locking the rack, to be used in certain cases of welding of installed piping: once the pipe fitting has been fixed in the clamp, the loading button is pressed and the handwheel is operated, moving the carriage toward the fixed post up to the end of the stroke; at this point, by actuating the additional device for temporarily locking the rack (not shown in the figures), the useful position is fixed so as to bring the welder in position and lock the pipe in the correct position; then the additional temporary locking device of the rack is released.

In both cases, after the locking step one acts on the handwheel 23, moving the carriage (and consequently the supporting block 18) away from the fixed post 16 and engaging the heating element 19 with the supporting block 18.

The welding sleeve 54 is associated with the heating element 19.

The heating element 19 must be already at the operating temperature.

The carriage 13 (and the block 18) are moved again toward the fixed post 16 until complete mating between the sleeve 54, the pipe 21 and the pipe fitting 15 is achieved, paying attention to the mark placed earlier on said pipe.

One then waits, according to the reference standards, for the time required for heating, and then the carriage 13 (and accordingly the block 18) is moved away and the heating element 19 is extracted rapidly with the sleeve 54.

The carriage 13 is then moved rapidly closer to the fixed post 16 and the mating of the pipe and the fitting is performed, always acting on the handwheel 23 in a graduated and constant manner until the intended complete insertion is achieved.

In practice it has been found that the invention thus described solves the problems noted in conventional types of socket welder.

In particular, the present invention provides a welder for plastics pipes and pipe fittings of the type for socket welding which can be used conveniently on pipes and pipe fittings which are already installed even in extremely confined work spaces.

The welder has in fact been designed to assume an extremely compact configuration, and the fact that the closure means of the first and second clamps, the actuation handwheel of the means for kinematic connection between the carriage and the fixed post, and the means for operating the heating element can be arranged conveniently on the most comfortable work side, allows to work even on pipes and pipe fittings which are adjacent to walls.

Advantageously, the kinematic connection means used allow a synchronized relative movement between the first and second clamps, thus allowing optimum insertion within the melting sleeve.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000071 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A welder for plastics pipes and pipe fittings of the type for socket welding, **characterized in that** it comprises:
- a compact longitudinal supporting member (11), on which a sliding guide (12) is arranged,
- a carriage (13), which supports a first clamp (14) for locking a pipe fitting or a pipe and is arranged so as to slide on said sliding guide (12),
- a fixed post (16) on said longitudinal supporting member (11), which is arranged substantially at one end of said sliding guide (12) and on which a second locking clamp (17) for a pipe or pipe fitting is arranged,
- a movable block (18) for supporting a heating element (19) onto which the sleeve (54) for melting the pipe fittings and/or pipes is to be fixed, said block (18) being provided with means (22) for kinematic connection to said carriage (13) and to said fixed post (16), an actuation handwheel (23) being associated with said kinematic connection means (22),
said actuation handwheel (23), the means (20, 40) for closing said first locking clamp (14) and said second locking clamp (17), the means (47) for operating said heating element (19) being arrangeable selectively on one of the two sides of said longitudinal supporting member (11), depending on the space available during use on already-installed pipes and/or pipe fittings.

2. The welder according to claim 1, **characterized in that** said kinematic connection means (22) comprise two racks (24), which are fixed respectively to said fixed post (16) and to said carriage (13) and mesh with a pinion, arranged on said block (18), to which said actuation handwheel (23) can be rigidly coupled.

3. The welder according to claim 2, **characterized in that** said two racks (24) are constituted by two toothed bars which are arranged parallel to each other and one above the other.

4. The welder according to one of the preceding claims, **characterized in that** said block (18) is arranged so that it can slide on said sliding guide (12).

5. The welder according to one or more of the preceding claims, **characterized in that** the first closure means (20) of said first locking clamp (14) comprise a base (26), which is rigidly coupled to said carriage (13) and on which an additional guide (27) is arranged at right angles to said sliding guide (13) for mutually opposite first jaws (28) of said first locking clamp (14), means (29) for moving said first jaws (28) being associated with said first jaws, which are actuated by a crank (30) which can be connected to said movement means (29) selectively on one of the two sides of said longitudinal supporting member (11).

6. The welder according to claim 5, **characterized in that** said movement means (29) comprise a worm screw (31)-female thread system associated with said first jaws (28), reversible coupling devices (32) for said crank (30) being provided at the end of said worm screw (31).

7. The welder according to one or more of the preceding claims, **characterized in that** each one of said first jaws (28) comprises a base portion (33), which is slidingly associated with said additional guide (27) and a locking portion (34), which is shaped substantially like an inverted V and is pivoted freely to said base portion (33) by a point (34a) which is located above (with reference to the Figures) the point of intersection between the bisecting line (34b) of the concavity and said locking portion (34).

8. The welder according to claim 7, **characterized in that** each locking portion (34) has, along its V-shaped profile, an abutment shoulder (35) for the end rim of the pipe or pipe fitting.

9. The welder according to claim 8, **characterized in that** it comprises extensions (36), which have the same V-shaped profile as said locking portions (34) and are reversibly fixed thereon so as to increase the supporting surface for said pipes or pipe fittings.

10. The welder according to one or more of the preceding claims, **characterized in that** said second locking clamp (17) has a base (37) on which there is an element (38) for engaging a complementarily shaped mating portion (39), which is provided on said fixed post (16), said engagement element (38) mating with said complementarily shaped mating portion (39) in two possible arrangements, one of which is rotated through 180° with respect to the other on the surface of contact of said second locking clamp (17) on said fixed post (16).

11. The welder according to claim 10, **characterized in that** said second locking clamp (17) is constituted by two second jaws (41a, 41b), which have a substantially semicylindrical internal shape and are mutually pivoted by one end, one (41a) of said two jaws being fixed, second closure means (40) for said second locking clamp (17), constituted by a lever system which is available to the operator, being associated with said two second jaws (41a, 41b).

12. The welder according to claim 11, **characterized in that** said lever system comprises a lever (43), which is pivoted to a first bracket, which is fixed to the movable jaw (41b) of said second jaws (41) and a rod (44), which is articulated to said lever (43) and to a second bracket, which is fixed to the second fixed jaw (41a).

13. The welder according to one or more of the preceding claims, **characterized in that** said heating element (19) comprises a metallic plate (45), which is mated so as to rotate slidingly with a frame (47), which is fixed to a base (48) for engaging said supporting block (18), said means (55) for operating the heating element being rigidly associated with said metallic plate (45), said operating means, rigidly with the plate (45), being slideable on said frame (47) for their movement from one side to the other of said longitudinal member (11).

14. The welder according to claim 13, **characterized in that** said frame (47) is constituted by two mutually opposite rings (52a, 52b), which are mutually fixed and lock in a sandwich-like fashion said metallic plate (45) along its axial movement, a first ring (52a) of said two mutually opposite rings (52a, 52b) mating slidingly with a circular guide (53), which is formed peripherally with respect to said metallic plate (45), the second ring (52b) being arranged on the opposite side of said plate (45) and being fixed peripherally, by bolting, to said first ring (52a), said first ring being fixed to said engagement base (48).

15. The welder according to claim 14, **characterized in that** said rings (52a, 52b) are connected by threaded elements (25a), which are inserted through respective spacer bushes (25b) for said rings (52a, 52b), at least one of said spacer bushes (25b) having a height which is substantially equal to the thickness of said metallic plate (45), while at least another one of said spacer bushes (25b) is lower, adjustment of the contact pressure of said rings (52a, 52b) on said plate (45) being possible by acting on the threaded element (25a) which corresponds to said lower bush.

16. The welder according to claim 15, **characterized in that** a lever (49) is pivoted to said engagement base (48) and has a portion (50) for mating with a locking element (51), which is provided on said supporting block (18), when said lever (49) is in the engagement position.

17. The welder according to claim 14, **characterized in that** said sleeve (54) is constituted by two separate portions, a male portion (54a) and a female portion (54b), which can be fixed in contact respectively with the two mutually opposite faces of said metallic plate (45).

18. A heating element for welders for plastics pipes and pipe fittings of the type for socket welding, **characterized in that** it comprises a metallic plate (45), which is mated by rotary sliding with a frame (47), which is fixed to a base (48) for engagement with a supporting element of the welder to which said heating element (19) is to be applied, means (55) for operating said heating element (19) being rigidly associated with said metallic plate (45) and being able to slide, rigidly with said plate (45), on said frame (47) for their movement from one side to the other of said longitudinal member (11).

19. The heating element for welders according to claim 18, **characterized in that** said frame (47) is constituted by two mutually opposite rings (52a, 52b), which are mutually fixed and lock in a sandwich-like fashion said metallic plate (45) along its axial movement, a first ring (52a) of said two mutually opposite rings (52a, 52b) mating slidingly with a circular guide (53) which is formed peripherally with respect to said metallic plate (45), the second ring (52b) being arranged on the opposite side of said plate (45) and being fixed peripherally, by bolting, to said first ring (52a), which is fixed to said engagement base (48).

20. The heating element for welders according to claim 19, **characterized in that** said rings (52a, 52b) are connected by threaded elements (25a), which are inserted through respective spacer bushes (25b) for said rings (52a, 52b), at least one of said spacer bushes (25b) being substantially as high as said metallic plate (45) is thick, at least one other bush of said spacer bushes (25b) being lower and acting on the threaded element (25a) which corresponds to the latter, adjustment of the contact pressure of said rings (52a, 52b) against said plate (45) being possible.

21. The heating element for welders according to claim 19 or 20, **characterized in that** a lever (49) is pivoted to said engagement base (48) and has a portion (50) for mating with a locking element (51) provided on said supporting element of the welder to which said heating element (19) is to be applied.

22. The heating element for welders according to claim 19 or 20, **characterized in that** said sleeve (54) is constituted by two separate portions, a male portion (54a) and a female portion (54b), which can be fixed in contact respectively with the two mutually opposite faces of said metallic plate (45).

23. A locking clamp for plastics pipe fittings and/or pipes to be used in welders for pipes and pipe fittings, comprising means (20) for closing said first locking clamp (14), which are constituted by a base (26) on which a guide (27) for mutually opposite first jaws (28) is arranged, means (29) for moving said first jaws (28) being associated with said first jaws, **characterized in that** said first jaws (28) each comprise a base portion (33), which is associated slidingly with said guide (27), and a locking portion (34), which is shaped substantially like an inverted V and is pivoted freely to said base portion (33) by a point (34a) which is located upward (with reference to the figures) relative to the point of intersection between the bisecting line (34b) of the concavity and said locking portion (34).

24. The locking clamp according to claim 23, **characterized in that** said movement means (29) comprise a worm screw (31)-female thread system associated with said first jaws (28) and actuated by a crank (30).

25. The locking clamp according to claim 24, **characterized in that** said crank (30) can be connected to said movement means (29) selectively on one of the two sides of said longitudinal supporting member (11), devices (32) for the reversible mating of said crank (30) being provided at the ends of said worm screw (31).

26. The locking clamp according to one or more of claims 23 to 25, **characterized in that** each locking portion (34) has, along the V-shaped profile, an abutment shoulder (35) for the end rim of the pipe or fitting.

27. The locking clamp according to claim 26, **characterized in that** it comprises extensions (36), which have the same V-shaped profile as said locking portions (34) and are reversibly fixed thereon so as to increase the supporting surface for said pipes or pipe fittings.
